# EUROPEAN PATENT SPECIFICATION

(11) **EP 2 806 237 B1**
(45) Date of publication and mention of the grant of the patent: **16.09.2015**
(21) Application number: 14168911.7
(22) Date of filing: 19.05.2014
(51) Int. Cl.: F25D 11/02, F25D 29/00, F25D 17/06

(54) **Method for cooling a refrigerated system and refrigerator.**
Verfahren zum Kühlen eines Kühlsystems und Kühlschrank.
Procédé de refroidissement d'un système de réfrigération et réfrigérateur.

(30) Priority: 22.05.2013 IT VA20130028
(43) Date of publication of application: 26.11.2014
(73) Proprietor: Whirlpool Corporation, Benton Harbor, MI 49022 (US)
(72) Inventor: D'Auria, Mariagrazia, 21025 Comerio (IT); Parnisari, Matteo, 21025 Comerio (IT); Sicher, Paolo, 21025 Comerio (IT); Ziermaier, Jutta, 21025 Comerio (IT)
(74) Representative: Guerci, Alessandro

(56) References cited:
- EP-A1- 0 987 504
- EP-A2- 0 987 507
- EP-A2- 1 176 346

## Description

The present invention relates to a method according to the preamble of claim 1 and to a refrigerator according to the preamble of claim 8. Such a method and refrigerator are known, for example, from EP-A1-0 987 504. More specifically, the invention relates to a method for the operation of a refrigerated system, in particular a "combined" or "double-door" domestic refrigerator, in which the consumption of energy to cool and preserve the items contained within it, foods in particular, is optimised.

As specified in the pre-characterising clause of the first claim, this invention relates to a refrigerated system provided with at least two cavities or compartments and equipped with a refrigerating circuit powered by a compressor. In each of the two cavities is at least one evaporator. The evaporators are arranged to cool the first cavity, typically a freezer compartment, to a lower temperature than that of the second cavity. The refrigerated system also comprises a solenoid valve capable of connecting the compressor of the refrigerated system to the first evaporator located in the first cavity, according to a first mode defined as single connection of the compressor to the first evaporator, and to connect the compressor to the first evaporator and to at least a second evaporator located in the second cavity, in a second mode defined as multiple connection of the compressor to the evaporators. A control system supervises and activates the operations of the system. Preferably, the multiple connection mode is of the type with the first and second evaporator connected in series to the compressor and where the solenoid valve is preferably a two- or multi-way valve. Preferably the solenoid valve is capable of bypassing the second evaporator when the first evaporator and second evaporator are connected in series. Additional evaporators may be present, located in one or more cavities or in additional cavities, connected together in the multiple connection mode by means of one or more solenoid valves. Note that in the mode of multiple connection of the compressor to the evaporators, according to the invention the latter may be connected together, apart from in series, also in parallel or in a mixed connection mode.

The method according to the present invention can also be applied both to refrigerated systems equipped with ON/OFF type compressors and to those equipped with variable-speed compressors.

According to the invention, at least the first cavity is equipped with a fan to circulate the cold air in the first compartment and with one or more temperature probes or sensors for the thermostatic control of the compartment. The temperature sensor can be arranged in the internal space of the compartment and/or directly on the evaporator.

The present method can also be applied both to refrigerated systems equipped with an hysteresis-type control logic to regulate the temperature of the compressor (typically, but not exclusively used in combination with ON/OFF compressors), and to systems that regulate the temperature by applying a PID-type control logic (typically by regulating the frequency of a variable-speed compressor). Note that the present method can also be applied with other more sophisticated automatic temperature control methods than those mentioned above.

Refrigeration systems of the type described above are known wherein cooling of the cell (or cavity) to a lower temperature, typically a freezer cell, is achieved by operating the evaporator together with a fan located in the same cavity during the single and multiple connection mode, until a useful lower temperature threshold is reached, at which the cooling of the cell is interrupted. These systems often waste energy since this energy is not always efficiently used to cool the elements located in the first compartment.

The aim of this invention is to provide a method and a refrigerator that enable the energy consumption of the entire system to be reduced, while continuing to guarantee the cooling of the cell cooled to a lower temperature. This aim is achieved by the method according to claim 1 and the refrigerator according to claim 8.

Further advantages of the present invention will emerge clearly from the following detailed description given purely by way of a non-limiting example, with reference to the accompanying drawings in which:
- Figure 1 is a schematic representation, in particular a front view and a lateral section of one of the possible refrigerated systems to which the method according to the invention is applied;
- Figure 2 is the graph of the temperature trend recorded in the first cavity when a cooling method according to the prior art is applied to the system in Figure 1;
- Figure 3 is the graph of the temperature trend recorded in the first cavity of the refrigerated system show in Figure 1 equipped with an ON/OFF compressor, when the method according to the invention is applied;
- Figure 4 is the graph of the temperature trend recorded in the first cavity of a refrigerated system equipped with a variable-speed compressor, when the cooling method according to the invention is applied;
- Figure 5 is the graph of the temperature trend recorded in the first cavity of the refrigerated system in Figure 1, equipped with an ON/OFF compressor, when critical conditions occur; and
- Figure 6 is the graph of the temperature trend recorded in the first cavity of the refrigerated system in Figure 1, with a variable-speed compressor, when critical conditions occur.

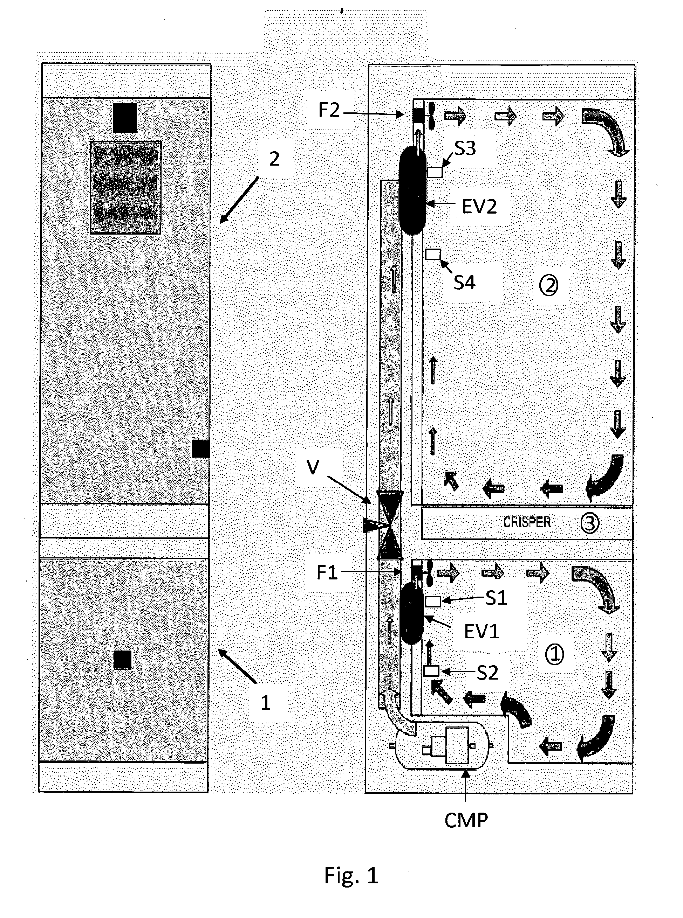

Figure 1 describes, by way of a non-limiting example, a refrigerated system to which the method of the present invention is applied. This is a "combined" refrigerator that comprises a first cavity 1 and a second cavity 2. The first cavity 1 is cooled in order to freeze items, particularly foods, to a first average reference temperature TSET1, for example -18°C. The second cavity 2 is of a refrigerator type for preserving fresh foods and is cooled to a second average reference temperature TSET2, for example 5°C. In the environment of the first cavity 1, the freezer compartment, is a first temperature probe S1, a sensor used to control the temperature in the first cavity 1. The refrigerated system comprises at least two evaporators EV1, EV2. In each cavity there is at least one evaporator. The system in Figure 1 shows a first evaporator EV1 located in the first cavity 1 and a second evaporator EV2 located in the second cavity 2. A solenoid valve V enables the connection of the ON/OFF compressor CMP of the refrigerated system to one or more evaporators. In the system described in Figure 1, the solenoid valve V is a two-state valve (known also as a two-way valve). In a first state, it enables the connection (single, exclusive) of the compressor CMP to the first evaporator EV1 located in the first cavity 1. In this single connection mode only the first cavity 1 is cooled by means of the first evaporator EV1. In a second state, the solenoid valve V connects the compressor CMP to the first evaporator EV1 connected in series to the second evaporator EV2. In this multiple connection mode of the compressor to the evaporators, the first 1 and second 2 cavity are cooled at the same time by means of the first evaporator EV1 and the second evaporator EV2 respectively. A second temperature sensor/probe S2 may be present in the first cavity 1, located near or directly upon the evaporator EV1. A first air circulation fan F1 is located in the first cavity 1 in order to create a uniform temperature inside said cavity 1. A second optional fan F2 is located in the second cavity 2, as illustrated in Fig. 1. In the first freezer cavity 1 a standard load, of a regulatory type, is placed, which better enables the advantages of the method according to this invention compared to the prior art to be assessed when energy consumption tests according to existing law are performed, the graphs of which, described below for the purposes of the present invention, represent an extract.

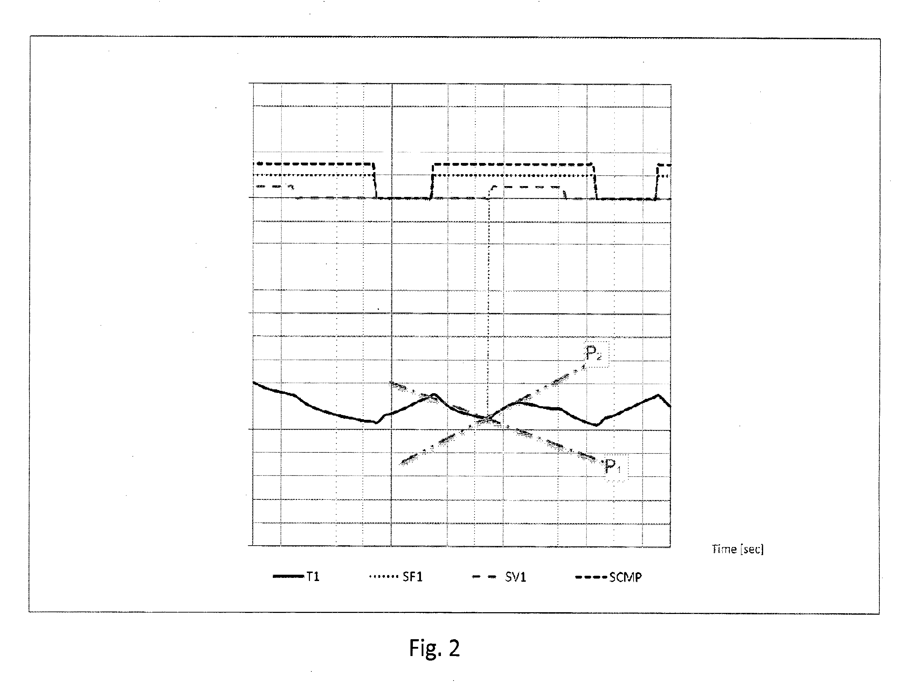

Figure 2 firstly shows, as a comparison, the graph of a test according to a non-optimised cooling method currently in use on commercial products, according to the prior art. The graph shows the behaviour of the temperature T1 of the first cavity 1 or freezer cell, recorded by the first temperature probe/sensor S1. The graph also shows the SCMP state of the ON/OFF compressor CMP which is represented as being ON, when the level of the "SCMP" signal in the graph is high, or OFF, when the level of the "SCMP" signal in the graph is low. The graph also shows the SV operating state of the solenoid valve V which corresponds to a single connection mode of the compressor to the first evaporator EV1 in relation to a high level of the "SV" signal shown, and to a multiple connection mode of the compressor to the evaporators, to a low level of the "SV" signal. Lastly, the graph shows the operating state SF1 of the first fan F1, which is on when there is a non-zero "SF1" pilot signal and off in the opposite case (low "SF1" signal level).

The graph shows that when the SCMP state of the compressor CMP and the SF1 status of the first fan F1 located in the first cavity 1 are both on during the single connection mode of the first evaporator EV1 to the compressor CMP, the average gradient P1 of the temperature signal T1 is negative.

As the SV state of solenoid valve V varies from the single connection mode of the compressor to the multiple mode, the average gradient of the temperature signal T1 recorded by means of the temperature probe S1 changes from a negative gradient P1 to a positive gradient P2.

Keeping the first fan F1 in the first cavity on when the solenoid valve V switches to the multiple connection mode of the evaporators, that is, when the temperature has a gradient P2 with a positive angular coefficient, is inefficient from the point of view of energy consumption because, under normal operating conditions of the refrigerated system, the evaporation temperature of the first evaporator EV1 could also become significantly hotter than the temperature T1 in the first cavity 1.

There now follows an example of optimised operation according to the invention, applied to the above-described refrigerated system in Fig. 1, when the system is equipped with an ON-OFF compressor.

The method according to the invention involves performing the following steps:
- cool the first cavity (1) in the first connection mode during which the first fan (F1) is switched on;
- cool the first cavity (1) and the second cavity (2) in the second connection mode;
- switch off the first fan (F1) during the second connection mode.

In detail, the first step consists in cooling the first cavity/compartment 1 to a temperature T1 below that of the second cavity 2, in a first mode in which the first evaporator EV1 is connected to the compressor CMP cutting off the supply to the second evaporator EV2, and switching on the first fan F1 locate in the first cavity 1. The second step consists in switching the state of the solenoid valve V in the second multiple connection mode of the compressor CMP to the evaporators EV1, EV2. This step is normally implemented in accordance with the control logic of the temperature of the refrigerated system in both cavities, said logic being normally of a temperature hysteresis type around the set reference temperature TSET, or of a PID type (thus including P and PI type adjustments) or even more sophisticated.

The (second) multiple connection mode is particularly advantageous, whereby the compressor CMP powers the first evaporator EV1 connected in series to the second evaporator EV2, as described in Figure 1. In any case, other modes of multiple connection of the evaporators are compatible with the present method.

Lastly, in an additional step of the method according to the invention, the first fan F1 is switched off when the previous switch from the first to the second mode has occurred. Preferably, the first fan F1 is switched off if "non-optimum" conditions occur for cooling the first cavity by using the first fan. These non-optimum conditions are defined below in relation to the specific configuration of the refrigerated system to which the method is applied.

According to an additional and successive step of the invention, only the first fan F1 is therefore switched back on if critical conditions occur, as detailed in a subsequent section of this description.

In detail, for a refrigerated system (not covered by the invention) in which the first cavity/compartment 1 contains both a first sensor S1 of temperature T1 located in the space of the first cavity 1, preferably in its environment, and a second sensor S2 of temperature T2 located substantially on the first evaporator EV1, or in any event near it, the non-optimum condition is defined by comparing temperatures T1 and T2. In particular, a non-optimum condition is identified when the second temperature T2 read by the second sensor/probe S2 located on the evaporator is higher than the first temperature T1 read by the first probe/sensor S1 preferably located in the environment of the first compartment cavity (Tevap>Tenv). In response to this occurrence, the first fan F1 located in the first cavity 1 is switched off until the second temperature T2, read by the second probe S2 located on the first evaporator EV1, is below or the same as the first temperature T1 read by the first probe S1 located in the first cavity 1 (Tevap<=Tenv). This condition should exist at least when a successive switching of the solenoid valve from the second to the first connection mode occurs, by means of the control logic of the temperature in the two cavities.

To achieve the above-mentioned aims, the method requires the following steps to be performed:
- acquire a first temperature (T1) in the first cavity (1) by means of a first temperature sensor (S1) during the first connection mode;
- acquire a second temperature (T2) in the first cavity (1) by means of a second temperature sensor (S2) in the subsequent second connection mode, said sensor being in contact with or close to the first evaporator (EV1).
- For this configuration of the refrigerated system, the step of switching off the first fan F1 consists therefore in switching off the first fan (F1) when the value of the first temperature T1 in the first cavity 1, preferably an averaged value of said temperature in a pre-set time window, is greater than the value of the second temperature (T2) in the first cavity (1). This latter value of the second temperature T2 is also preferably an averaged value in a pre-set time window. In the configuration of the refrigerated system according to the invention, where in the first cavity/compartment 1 there is only one sensor S1 of temperature T1, preferably located within its environment, the non-optimum condition is identified by analysing the relation between the gradients of the temperature signal T1 in the first cavity 1 during the (first) single connection mode of the compressor CMP (i.e. when the solenoid valve V is in the cooling position of the first cavity only, the coldest, called also the single connection mode of the compressor CMP to the first evaporator EV1) and the gradient of the temperature signal T1 in the first cavity 1 during the (second) mode of multiple connection of the compressor CMP (i.e. when the solenoid valve is in the multiple connection mode of the compressor to the two evaporators, preferably in a configuration of the cooling system in which the evaporators EV1 and EV2 located in the different cavities 1 and 2, are connected in series to the compressor CMP).

Preferably, the non-optimum operating condition is identified by detecting a change in the average gradient in time of the temperature signal T1 measured by the first probe S1, when it passes from a first value m1 to a second value m2. Preferably, m1 is the gradient of the straight line P1 which represents the average value of the temperature signal T1 measured by the single probe S1 located in the first cavity 1 in the first connection mode. Preferably m2 is the gradient of the straight line P2 which represents the average value of the temperature signal T2 in the first cavity when the solenoid valve V is in the multiple connection mode of the compressor to both evaporators. Preferably, the value of the gradient of the temperature signal m1 in the first mode is a value calculated at the end of the corresponding first operating mode while, in the (second) mode of multiple connection, the value of the average gradient must be updated according to a frequency that is at least equal to the one required to control the temperature in the cavities of the refrigerated system.

According to this configuration of the refrigerated system the non-optimal condition is recorded when the angular coefficient m2 of the straight line P2 is greater that the angular coefficient m1 of the straight line P1, or at least when the angular coefficient m2 of the straight line P2 becomes positive.

So for this type of refrigerated system the method according to the invention comprises the following steps:
- acquire a first temperature T1 of the first cavity 1 in the first connection mode, during which the first fan F1 is switched on;
- define a first gradient m1, preferably an average gradient in a pre-set time window, of the trend of the first temperature T1 in the first cavity 1 during the first connection mode;
- acquire a first temperature T1 of the first cavity 1 in the second connection mode;
- define a second gradient m2, preferably an average gradient in a pre-set time window, of the trend of the first temperature T1 in the first cavity 1, during the second connection mode;
- when the step of switching off the first fan (F1) is performed when the second gradient m2 of the average gradient of the first temperature T1 in the first cavity is greater than the first gradient (P1) of the trend of the first temperature T1 in the first cavity.

Other m1 or m2 parameters related to the gradients described can be used for the same purpose, even those obtained by means of estimates based on other operating parameters of the refrigerated system, for example by using the temperature of the second evaporator EV2 in the second cavity acquired by means of an additional temperature sensor S3 during the second operating mode.

For both of the cases described in relation to the different configurations of the refrigerated system, the first fan F1 of the first cavity 1 (cooled to a lower temperature) remains off for as long as the non-optimum condition persists. In these normal operating conditions, the temperature T1 measured by the first sensor S1 in the first cavity 1 increases within the pre-set control limits of temperature T1. At a certain point, the electronic control of temperature T1 will switch the solenoid valve V back to the first connection mode and will switch the first fan F1 back on.

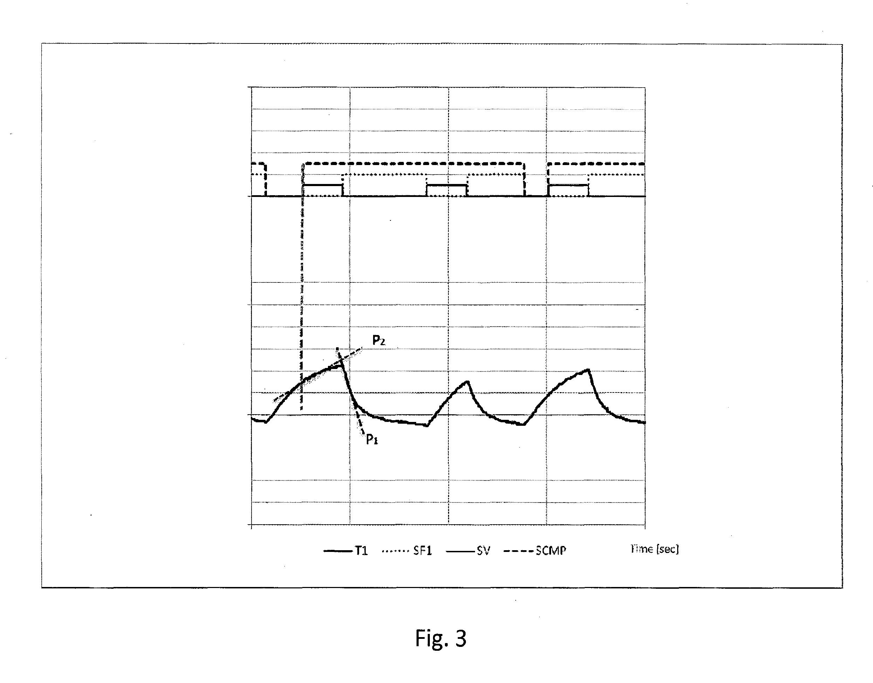

Figure 3 shows the trend of a regulatory consumption test in a refrigerated system equipped with a single temperature probe S1 located within the environment of the first cavity 1, during which the method according to the invention is adopted. The signals shown in the graph are those previously described in relation to Fig. 2. Note that when the state SCMP of the compressor CMP is ON, and the state SV of the solenoid valve V is that of multiple connection of the compressor CMP to the two evaporators EV1, EV2, the average gradient m2 of the temperature signal T1 of the first cavity 1, the coldest one, has a positive angular coefficient, showing a non-optimum condition of the operation of the refrigerated system. Consequently, the first fan F1 located in the first cavity 1 cooled to the lower temperature is switched off, as can be seen in the graph of its state SF1. The first fan F1 is switched back on by the temperature control of the first cavity, when the value of the temperature T1 measured by the probe in the first cavity 1 changes the state of the solenoid valve V, as can be seen in the graph of its state SV when the temperature signal T1 changes its gradient P1.

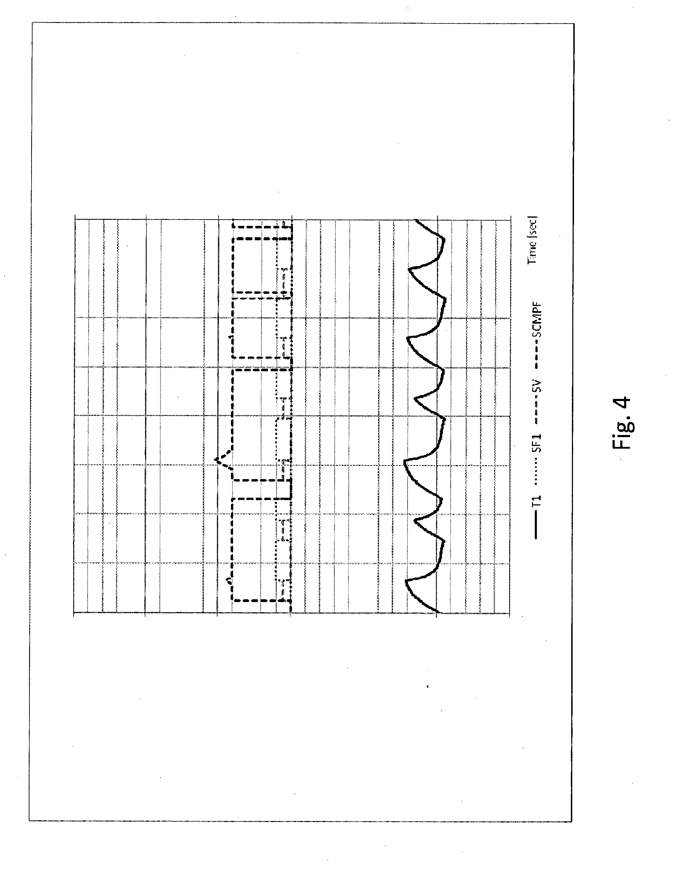

Figure 4 shows similar signals of a consumption test performed on a refrigerated system equipped with a single temperature probe S1 in the first cavity and one variable-speed compressor CMP. The method according to the invention is therefore applicable to refrigerated systems equipped with a variable-speed compressor where the control of the first fan F1 located in the first cavity 1 cooled to a lower temperature is absolutely identical to that described for the refrigerated system equipped with an ON/OFF compressor.

The only difference is that in this case the compressor CMP is commanded by a control signal SCMPF correlated to the frequency of change of the compressor and not relative to its state (ON/OFF).

For these types of refrigerated systems the first fan F1 is switched back on when the temperature T1 of the first cavity 1 cooled to a lower temperature rises within tolerances pre-set by the control and depending on the level of the set reference temperature TSET1 for the first cavity, for example -18°C, when the temperature control will switch the solenoid valve back on in the single connection mode and will switch the first fan F1 back on.

Preferably the refrigerated system comprises an electronic control unit, which performs these and any other subsequent steps of the method.

The behaviour of the refrigerated system deviates from the above-described operation when the critical conditions described below occur. In particular, these conditions dictate that the first fan F1 located in the first cavity 1 is switched on even when the refrigerated system is in non-optimum operating conditions.

This occurs for example when the ambient conditions in which the refrigerated system exists are unfavourable, for example when the ambient temperature of the refrigerated system is above 40°C. Critical conditions also occur when the door of the first cell or second cell remains open for a prolonged period of time so as to significantly raise the average temperature of the first cavity, or when a new significant thermal load to be cooled is introduced into the first or second cavity. In these cases, a rise in temperature occurs in the first or second cooled cell (the latter cooled to a higher temperature than the former), above the normal parameters and/or temperature control thresholds.

In these conditions, the refrigerated system must still guarantee the preservation of the elements by maintaining a temperature in the cavities which is compatible with the preservation of the items/foods.

For this purpose, and for a time necessary to re-establish normal operating conditions, the entire refrigerated system will be cooled with the solenoid valve configured in the multiple connection mode of evaporators EV1 and EV2 to the compressor CMP, so as to cool the first and second cavity at the same time, albeit slowly.

According to the invention, when the control error of temperature T1 in the first cavity 1 defined as temperature T1 of the first cavity 1 compared to the set reference value TSET1 (e.g. - 18°C), exceeds a pre-set switch-on threshold Fan_ON_Th, the first fan F1 is still switched on. This pre-set switch-on threshold Fan_ON_Th can be defined in a different way depending on the type of refrigerated system, depending on the set cooling function (e.g. freezing at a pre-set temperature value, fast freeze, etc.) and in particular in relation to the type of compressor used. The first fan F1 will switch off in the next condition in which the temperature T1 of the first cavity 1 reaches a pre-set switch-off threshold Fan_OFF_Th, also definable in a different way depending on the type of refrigerated system and in particular in relation to the type of compressor used and the type of temperature control adopted.

For example, in the case of refrigerated systems equipped with temperature regulation according to a control logic of the hysteresis compressor (ON/OFF), the temperature thresholds for switching the first fan F1 of the first cavity on and off being pre-set, these thresholds can for example be derived from the thresholds for switching the cooling system on and off used by the hysteresis temperature control for the first cavity (e.g. by the control of the solenoid valve V and/or the compressor CMP), and in relation to the accuracy of the control to be implemented, which also depends on the accuracy of each of the temperature probes S1, S2, S3 and S4, the latter possibly being a temperature sensor located within the environment of the second cavity. The same principle can be established for the operation of a second fan F2 possibly located in the second cavity 2, in relation to the temperature T4 of the environment of the second cavity 2 or in relation to the temperature T3 of the evaporator in the second cavity.

In particular, for the first cavity 1, there are defined, for example, a pre-set CUT_OFF threshold of the cooling system, i.e. a lower temperature value below which the coldest compartment, the first cavity, does not need to be cooled further; and a pre-set CUT_ON threshold of the cooling system, i.e. an upper temperature value above which the coldest compartment (the first cavity) must necessary be cooled in order to prevent deterioration of the stored foods.

On the basis of these control values of the cooling system, it is possible, for example, to define the pre-set switch-on threshold Fan_ON_Th of the first fan and pre-set switch-off threshold Fan_OFF_Th of the first fan F1 in the first cavity 1, when critical conditions occur, as follows:
Fan_ON_Th = CUT_ON + ΔON
Fan_OFF_Th = CUT_OFF + ΔOFF

Where ΔON and ΔOFF are temperature values that can assume values ranging between -5°C and +5°C, preferably between -3°C and +3°C, and that depend on the desired accuracy of the control, and in particular on the accuracy of the temperature sensors/probes S1, S2, S3.

For example, for a freeze function in the first cavity 1 at the average reference temperature TSET of -19°C we may have CUT_ON = 17°C, CUT_OFF = -19°C, ΔON = +3°C and ΔOFF = +3°C.

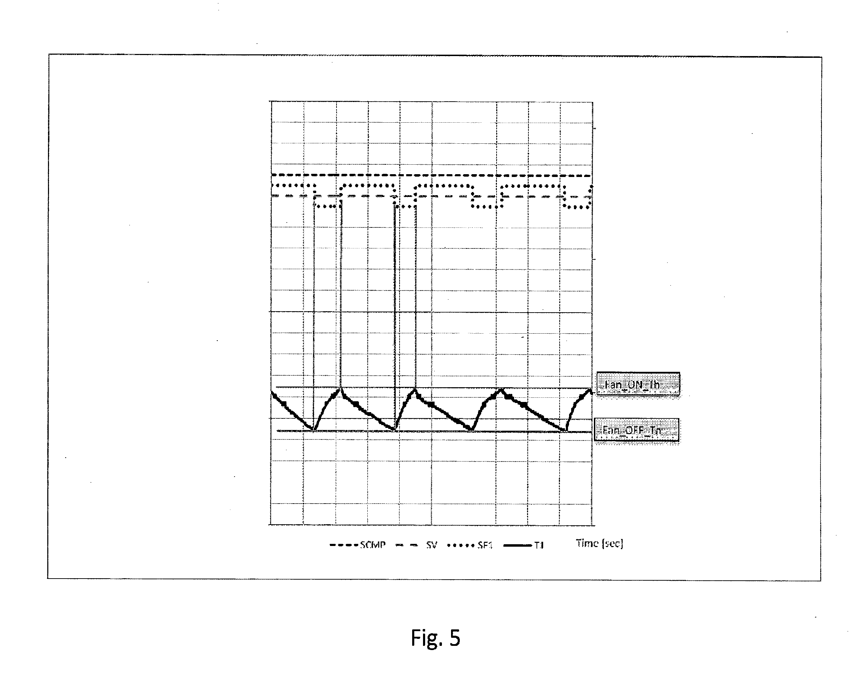

The graph in Figure 5 shows the response of the refrigerated system in Fig. 1 in the first compartment under the critical conditions caused by the temperature of the external environment set at 43°C.

The graphs show that the compressor is still on, in other words its SCMP state is ON and the SV state of the solenoid valve V remains in the multiple connection mode of evaporators EV1 EV2, i.e. the state that enables contemporaneous cooling of both evaporators EV1 EV2 located in both cavities 1 and 2. In this condition the first fan F1 located in the first cavity 1 should, according to the logic of the invention described above, always remain off causing, due to the presence of critical conditions, a high and prolonged rise of the temperature T1 in the first cavity compartment, at a level that could compromise the preservation of the cooled foods. For this reason, once the pre-set temperature maximum threshold for the first cavity, Fan_ON_Th, has been exceeded, the first fan F1 is switched on. Switching on the first fan F1 promotes the conveyance into the first cavity 1 of the coldness generated by the first evaporator EV1. This still allows the first cavity 1 to be cooled and a temperature T1 necessary to freeze and/or preserve the elements stored therein still to be maintained. The first fan F1 is subsequently switched off when the temperature T1 of the first cavity 1 reaches another lower threshold Fan_OFF_Th, capable of guaranteeing effective cooling of the first cavity, i.e. of the coldest compartment of the refrigerated system. Like the previous case, in the case of refrigerated systems equipped with variable-speed compressors that regulate the temperature by applying a PID logic control by means of a control signal of the compressor correlated to the frequency of change, pre-set thresholds are defined on the errors in frequency that cause Fan_ON_Err and Fan_OFF_Err of the first fan F1 in the first cavity 1 to switch on and off respectively, said thresholds being correlated to corresponding pre-set temperatures that cause Fan_ON_Th and Fan_OFF_Th of the first fan F1 to switch on and off respectively.

In particular, the pre-set threshold that switches on Fan_ON_Err is the value of the control variable above which the first fan F1 is in any event switched on.

By way of example, the pre-set threshold that switches on Fan_ON_Err in the case of a refrigerated system with a variable-speed compressor can be defined as:
FREQ_MAX*βON
where FREQ_MAX is the maximum value of the control variable of the compressor, to which corresponds the maximum speed of rotation of the latter and during which the compressor generates its maximum refrigeration capacity, and βON is a coefficient that can assume values ranging between 0 and 1, preferably between 0 and 0.95.

Similarly, the pre-set threshold that switches off Fan_OFF_Err is the value of the control variable of the compressor below which the first fan F1 is switched off.

By way of example, the pre-set threshold that switches on Fan_OFF_Err in the case of a refrigerated system with a variable-speed compressor, can be defined as:
FREQ_MAX*βOFF
where βOFF preferably assumes values ranging between 0 and 1, preferably between 0.75 and βON.

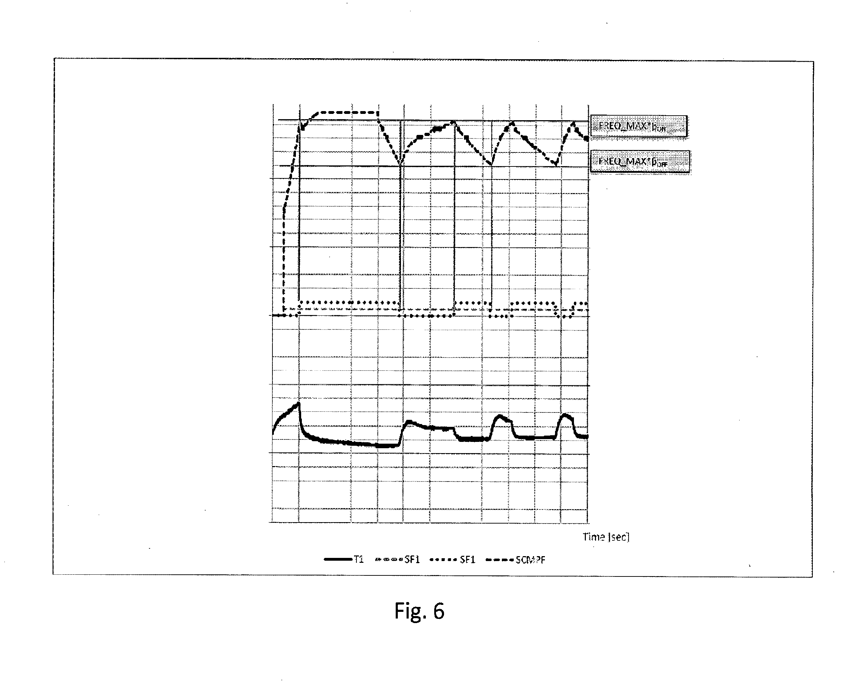

Figure 6 shows the response of the refrigerated system in Fig. 1, equipped with a variable-speed compressor, under the critical conditions imposed with the external ambient temperature at 43°C.

As can be seen in the graphs, also in the case of a refrigerated system with a variable-speed compressor, and possibly with PID control logic, under critical conditions the compressor CMP is always on and the state SV of the solenoid valve V persists in the multiple connection mode of evaporators EV1 EV2 connected in series to the compressor CMP.

Under these conditions the first fan F1 should, according to the logic described above, always remain off causing a rise in the temperature T1 in the first cavity 1.

For this reason, when the value of the control variable of the compressor exceeds the pre-set threshold that switches on Fan_OFF_Err, defined for the first cavity 1, the first fan F1 is switched on.

In a similar way to the case described in Figure 5, the first fan F1 is subsequently switched off when the value of the control variable of the compressor falls below the pre-set threshold that switches off Fan_OFF_Err, the latter being capable of guaranteeing effective cooling of the first cavity 1, i.e. of the coldest compartment of the refrigerated system.

A method has therefore been described that enables the energy consumption of the entire refrigerated system to be reduced while still continuing to guarantee cooling of the lowest-temperature cell. According to the present invention, the fan of the first (coldest) compartment is switched on only when it provides a real benefit to reducing the cavity temperatures.

## Claims

1. Method for cooling a refrigerated system, said system comprising: a compressor (CMP), a first cavity (1) and a second cavity (2) capable of being cooled to a first reference temperature (TSET1) and to a second reference temperature (TSET2) respectively, said first reference temperature (TSET1) being lower than said second reference temperature (TSET2), a first evaporator (EV1) located in said first cavity (1) and a second evaporator (EV2) located in said second cavity (2), a solenoid valve (V) located in the refrigerant circuit capable of connecting in a first connection mode the compressor (CMP) to the first evaporator (EV1) and in a second multiple connection mode the compressor (CMP) to the first evaporator (EV1) and to the second evaporator (EV2), the refrigerated system also comprising an air-circulation fan (F1) located in said first cavity (1), the method comprising the subsequent steps of:
- cooling the first cavity (1) in the first connection mode during which the first fan (F1) is switched on;
- cooling the first cavity (1) and the second cavity (2) in the second and subsequent connection mode, the fan (F1) being switched off during the second connection mode, **characterized in that** the method comprises also the steps of:
- acquiring a first temperature (T1) in the first cavity (1) in the first connection mode, during which the fan (F1) is switched on,
- defining a first gradient (m1) of the trend of the first temperature (T1) in the first cavity (1) during the first connection mode;
- acquiring a first temperature (T1) of the first cavity (1) in the second connection mode,
- defining a second gradient (m2) of the trend of the first temperature (T1) in the first cavity (1) during the second connection mode, where the step of switching off the fan (F1) during the second connection mode is performed when the second gradient (m2) is greater than the first gradient (m1).

2. Method according to any of the preceding claims including also the step of switching the fan (F1) back on when the value of the first temperature (T1) in the first cavity (1) reaches a pre-set switch-on threshold (Fan_ON_Th) for the first cavity (1), said pre-set switch-on threshold being defined in relation to the accuracy of a temperature control in the first cavity (1), and /or by a set cooling function.

3. Method according to claim 2 where reaching the pre-set switch-on threshold (Fan_ON_Th) for the first cavity (1) involves exceeding a corresponding error-control threshold (Fan_ON_Err) of a control variable of the compressor (CMP), this control variable of the compressor preferably being correlated to a driving frequency of said compressor.

4. Method according to any of the preceding claims in which said compressor (CMP) is an ON/OFF type compressor in which the logic for regulating the temperature (T1) in the first cavity (1) is of the hysteresis type.

5. Method according to any of the preceding claims from 1 to 3 in which said compressor (CMP) is a variable-speed compressor in which the logic for regulating the temperature (T1) in the first cavity (1) is of a hysteresis or PID type.

6. Method according to any of the preceding claims in which said solenoid valve (V) is capable of bypassing the second evaporator (EV2) when the first evaporator (EV1) and the second evaporator (EV2) are connected in series and also comprises the step of disconnecting the first evaporator (EV1) from the in-series connection to the second evaporator (EV2).

7. Method according to any of the preceding claims in which the refrigerated system also comprises an auxiliary fan (F2) located in the second cavity (2), the method also comprises the step of switching on and/or switching off said auxiliary fan (F2) in order to cool the second cavity (2).

8. Refrigerator comprising a refrigerating circuit with a compressor (CMP), a first cavity (1) and a second cavity (2) capable of being cooled to a first reference temperature (TSET1) and to a second reference temperature (TSET2) respectively, said first reference temperature being below said second reference temperature, a first evaporator (EV1) located in said first cavity (1) and a second evaporator (EV2) located in said second cavity (2), a solenoid valve (V) located in the refrigerant circuit capable of connecting in a first connection mode the compressor (CMP) to the first evaporator (EV1) and in a second connection mode the compressor (CMP) to the first evaporator (EV1) and to the second evaporator (EV2), the refrigerated system also comprising an air-circulation fan (F1) located in said first cavity (1), **characterized in that** it comprises a control unit configured to carry out a method according to any of the preceding claims.

## Patentansprüche

1. Verfahren zum Kühlen eines Kühlsystems, wobei das System umfasst: einen Kompressor (CMP), einen ersten Hohlraum (1) und einen zweiten Hohlraum (2), die auf eine erste Referenztemperatur (TSET1) bzw. auf eine zweite Referenztemperatur (TSET2) gekühlt werden können, wobei die erste Referenztemperatur (TSET1) niedriger als die zweite Referenztemperatur (TSET2) ist, einen ersten Verdampfer (EV1), der in dem ersten Hohlraum (1) angeordnet ist, und einen zweiten Verdampfer (EV2), der in dem zweiten Hohlraum (2) angeordnet ist, ein Magnetventil (V), das in dem Kältemittelkreis angeordnet ist und in der Lage ist, in einem ersten Verbindungsmodus den Kompressor (CMP) mit dem ersten Verdampfer (EV1) zu verbinden und in einem zweiten Mehrfachverbindungsmodus den Kompressor (CMP) mit dem ersten Verdampfer (EV1) und mit dem zweiten Verdampfer (EV2) zu verbinden, wobei das Kühlsystem auch einen Luftumwälzventilator (F1) umfasst, der in dem ersten Hohlraum (1) angeordnet ist, wobei das Verfahren die nachfolgenden Schritte umfasst:
- Kühlen des ersten Hohlraums (1) in dem ersten Verbindungsmodus, während dessen der erste Ventilator (F1) eingeschaltet wird;
- Kühlen des ersten Hohlraums (1) und des zweiten Hohlraums (2) in dem zweiten und nachfolgenden Verbindungsmodus, wobei der Ventilator (F1) während des zweiten Verbindungsmodus ausgeschaltet wird,
**dadurch gekennzeichnet, dass** das Verfahren auch folgende Schritte umfasst:
- Erfassen einer ersten Temperatur (T1) in dem ersten Hohlraum (1) in dem ersten Verbindungsmodus, während dessen der Ventilator (F1) eingeschaltet wird,
- Definieren eines ersten Gradienten (m1) des Trends der ersten Temperatur (T1) in dem ersten Hohlraum (1) während des ersten Verbindungsmodus,
- Erfassen einer ersten Temperatur (T1) des ersten Hohlraums (1) in dem zweiten Verbindungsmodus,
- Definieren eines zweiten Gradienten (m2) des Trends der ersten Temperatur (T1) in dem ersten Hohlraum (1) während des zweiten Verbindungsmodus, wobei der Schritt des Ausschaltens des Ventilators (F1) während des zweiten Verbindungsmodus durchgeführt wird, wenn der zweite Gradient (m2) größer als der erste Gradient (m1) ist.

2. Verfahren nach einem beliebigen der vorhergehenden Ansprüche, ebenfalls umfassend den Schritt des Wiedereinschaltens des Ventilators (F1), wenn der Wert der ersten Temperatur (T1) in dem ersten Hohlraum (1) einen voreingestellten Einschalt-Schwellwert (Fan_ON_Th) für den ersten Hohlraum (1) erreicht, wobei der voreingestellte Einschalt-Schwellwert in Relation zu der Genauigkeit einer Temperaturregelung in dem ersten Hohlraum (1) und/oder durch eine eingestellte Kühlfunktion definiert wird.

3. Verfahren nach Anspruch 2, wobei das Erreichen des voreingestellten Einschalt-Schwellwerts (Fan_ON_Th) für den ersten Hohlraum (1) das Überschreiten eines entsprechenden Fehlersteuerungs-Schwellwerts (Fan_ON_Err) einer Steuergröße des Kompressors (CMP) mit einschließt, wobei diese Steuergröße des Kompressors vorzugsweise mit einer Antriebsfrequenz des Kompressors in Beziehung gesetzt ist.

4. Verfahren nach einem beliebigen der vorhergehenden Ansprüche, wobei der Kompressor (CMP) ein Kompressor vom EIN/AUS-Typ ist, bei dem die Logik zum Regeln der Temperatur (T1) in dem ersten Hohlraum (1) vom Hysteresetyp ist.

5. Verfahren nach einem beliebigen der vorhergehenden Ansprüche von 1 bis 3, wobei der Kompressor (CMP) ein Kompressor mit variabler Drehzahl ist, bei dem die Logik zum Regeln der Temperatur (T1) in dem ersten Hohlraum (1) vom Hysterese- oder PID-Typ ist.

6. Verfahren nach einem beliebigen der vorhergehenden Ansprüche, wobei das Magnetventil (V) in der Lage ist, den zweiten Verdampfer (EV2) zu umgehen, wenn der erste Verdampfer (EV1) und der zweite Verdampfer (EV2) in Reihe geschaltet sind, und welches auch den Schritt des Trennens des ersten Verdampfers (EV1) von der Reihenschaltung mit dem zweiten Verdampfer (EV2) umfasst.

7. Verfahren nach einem beliebigen der vorhergehenden Ansprüche, wobei das Kühlsystem auch einen Hilfsventilator (F2) umfasst, der in dem zweiten Hohlraum (2) angeordnet ist, wobei das Verfahren auch den Schritt des Einschaltens und/oder Ausschaltens des Hilfsventilators (F2) umfasst, um den zweiten Hohlraum (2) zu kühlen.

8. Kältegerät, umfassend einen Kältekreis mit einem Kompressor (CMP), einen ersten Hohlraum (1) und einen zweiten Hohlraum (2), die auf eine erste Referenztemperatur (TSET1) bzw. auf eine zweite Referenztemperatur (TSET2) gekühlt werden können, wobei die erste Referenztemperatur unter der zweiten Referenztemperatur liegt, einen ersten Verdampfer (EV1), der in dem ersten Hohlraum (1) angeordnet ist, und einen zweiten Verdampfer (EV2), der in dem zweiten Hohlraum (2) angeordnet ist, ein Magnetventil (V), das in dem Kältemittelkreis angeordnet ist und in der Lage ist, in einem ersten Verbindungsmodus den Kompressor (CMP) mit dem ersten Verdampfer (EV1) zu verbinden und in einem zweiten Verbindungsmodus den Kompressor (CMP) mit dem ersten Verdampfer (EV1) und dem zweiten Verdampfer (EV2) zu verbinden, wobei das Kühlsystem auch einen Luftumwälzventilator (F1) umfasst, der in dem ersten Hohlraum (1) angeordnet ist, **dadurch gekennzeichnet, dass** es eine Steuerung umfasst, die dazu ausgebildet ist, ein Verfahren nach einem beliebigen der vorhergehenden Ansprüche auszuführen.

## Revendications

1. Procédé de refroidissement d'un système réfrigéré, ledit système comprenant : un compresseur (CMP), une première cavité (1) et une seconde cavité (2) susceptibles d'être refroidies respectivement à une première température de référence (TSET1) et à une seconde température de référence (TSET2), ladite première température de référence (TSET1) étant plus basse que ladite seconde température de référence (TSET2), un premier évaporateur (EV1) situé dans ladite première cavité (1) et un second évaporateur (EV2) situé dans ladite seconde cavité (2), une électrovanne (V) située dans le circuit réfrigérant susceptible de connecter dans un premier mode de connexion le compresseur (CMP) au premier évaporateur (EV1) et dans un second mode de connexion multiple le compresseur (CMP) au premier évaporateur (EV1) et au second évaporateur (EV2), le système réfrigéré comprenant également un ventilateur de circulation d'air (F1) situé dans ladite première cavité (1), le procédé comprenant les étapes successives de :
- refroidissement de la première cavité (1) dans le premier mode de connexion pendant lequel le premier ventilateur (F1) est en fonction ;
- refroidissement de la première cavité (1) et de la seconde cavité (2) dans le second et suivant mode de connexion, le ventilateur (F1) étant hors fonction pendant le second mode de connexion,
**caractérisé en ce que** le procédé comprend également les étapes de :
- acquisition d'une première température (T1) dans la première cavité (1) dans le premier mode de connexion, pendant lequel le ventilateur (F1) est en fonction,
- définition d'un premier gradient (m1) de la tendance de la première température (T1) dans la première cavité (1) pendant le premier mode de connexion,
- acquisition d'une première température (T1) de la première cavité (1) dans le second mode de connexion,
- définition d'un second gradient (m2) de la tendance de la première température (T1) dans la première cavité (1) pendant le second mode de connexion, où l'étape de mise hors fonction du ventilateur (F1) pendant le second mode de connexion est effectuée quand le second gradient (m2) est plus grand que le premier gradient (m1).

2. Procédé selon n'importe laquelle des revendications précédentes incluant également l'étape de commutation du ventilateur (F1) en fonction quand la valeur de la première température (T1) dans la première cavité (1) atteint un seuil de mise en fonction défini à l'avance (Fan_ON_Th) pour la première cavité (1), ledit seuil de mise en fonction défini à l'avance étant défini par rapport à la précision d'une commande de température dans la première cavité (1) et/ou par une fonction de réglage de refroidissant.

3. Procédé selon la revendication 2, dans lequel le fait d'atteindre le seuil de mise en fonction défini à l'avance (Fan_ON_Th) pour la première cavité (1) implique le dépassement d'un seuil de maîtrise d'erreur correspondant (Fan_ON_Err) d'une grandeur réglée du compresseur (CMP), cette grandeur réglée du compresseur étant de préférence corrélée à une fréquence de pilotage dudit e compresseur.

4. Procédé selon n'importe laquelle des revendications précédentes, dans lequel ledit compresseur (CMP) est un compresseur du type « MARCHE/ARRÊT » dans lequel la logique pour réguler la température (T1) dans la première cavité (1) est du type hystérésis.

5. Procédé selon n'importe laquelle des revendications précédentes 1 à 3, dans lequel ledit compresseur (CMP) est un compresseur à vitesse variable dans lequel la logique pour réguler la température (T1) dans la première cavité (1) est d'un type PID ou hystérésis.

6. Procédé selon n'importe laquelle des revendications précédentes, dans lequel ladite électrovanne (V) est susceptible de contourner le second évaporateur (EV2) lorsque le premier évaporateur (EV1) et le second évaporateur (EV2) sont reliés en série et comprend également l'étape de déconnexion du premier évaporateur (EV1) de la connexion en série au second évaporateur (EV2).

7. Procédé selon n'importe laquelle des revendications précédentes, dans lequel le système réfrigéré comprend également un ventilateur auxiliaire (F2) situé dans la seconde cavité (2), le procédé comprend également l'étape de mise en fonction et/ou hors fonction dudit ventilateur auxiliaire (F2) pour refroidir la seconde cavité (2).

8. Réfrigérateur comprenant un circuit de réfrigération avec un compresseur (CMP), une première cavité (1) et une seconde cavité (2) susceptibles d'être refroidies respectivement jusqu'à une première température de référence (TSET1) et jusqu'à une seconde température de référence (TSET2), ladite première température de référence étant inférieure à ladite seconde température de référence, un premier évaporateur (EV1) situé dans ladite première cavité (1) et un second évaporateur (EV2) situé dans ladite seconde cavité (2), une électrovanne (V) située dans le circuit réfrigérant susceptible de connecter dans un premier mode de connexion le compresseur (CMP) au premier évaporateur (EV1) et dans un second mode de connexion le compresseur (CMP) au premier évaporateur (EV1) et au second évaporateur (EV2), le système réfrigéré comprenant également un ventilateur de circulation d'air (F1) situé dans ladite première cavité (1), **caractérisé en ce qu'**il comprend une unité de commande configurée pour effectuer un procédé selon n'importe laquelle des revendications précédentes.
